# EUROPEAN PATENT APPLICATION

(11) **EP 1 001 624 A2**
(43) Date of publication of application: **17.05.2000**
(21) Application number: 99308951.5
(22) Date of filing: 10.11.1999
(51) Int. Cl.: H04N 5/913

(54) **Copy generation management**

(30) Priority: 11.11.1998 JP 32109798
(71) Applicant: SONY CORPORATION, Tokyo 141 (JP)
(72) Inventor: Kohashi, Takashi, Int. Property Dept., Shinagawa-ku, Tokyo 141 (JP); Ogino, Akira, Int. Property Dept., Shinagawa-ku, Tokyo 141 (JP); Nakamura, Masashi, Int. Property Dept., Shinagawa-ku, Tokyo 141 (JP); Kimura, Yuji, Int. Property Dept., Shinagawa-ku, Tokyo 141 (JP); Ikeda, Nozomu Int. Property Dept., Shinagawa-ku, Tokyo 141 (JP); Nakamura, Osamu, Int. Property Dept., Shinagawa-ku, Tokyo 141 (JP)
(74) Representative: Turner, James Arthur

(57) **Abstract**

To manage copy generations, additional information made of electronically watermarked information and other additional information are appended to an information signal. The updating of CGMS information and other additional information is managed based on the additional information made of the electronically watermarked information. Accordingly, additional information for copy generation management such as CGMS information can always be kept in a correct condition so that proper copy generation limitation control can always be performed.

## Description

The present invention relates to copy generation management, for example (though not exclusively) methods for controlling the copying of information signals such as, e.g., video signals, and information signal recording apparatus, outputting apparatus, and reproducing apparatus to which such methods can be applied.

In recent years, with widespread use of digital contents of Internet, digital video disk, and the like, copyright infringement by illegal copying of the digital contents is becoming problematic. Accordingly, as a method for countering this problem, there is an attempt to append copy control information to the digital contents and prevent illegal copying by use of the additional information.

As control for the copy prevention, one idea is to provide, depending on information sources, the case where copying is wholly permitted, and the case (a generation-limiting copy control system) where one copying is permitted but copying from a duplication once made is inhibited.

As the latter generation-limiting copy control system, a system is desired which permits effective control of copy generations. As a system capable of managing copy generations, CGMS (Copy Generation Management System) is proposed.

The CGMS system, during information transmission, for an analog video signal (called CGMS-A), superimposes, as copy control information, 2 bits of 20-bit additional information superimposed on a specific horizontal section within a vertical blanking period of a brightness signal of the video signal, for example, a valid video portion of the 20-th horizontal section in the case of NTSC signals; for a digital video signal (called CGMS-D), as additional information, inserts 2-bit copy control information in digital video data.

In the CGMS system, the 2-bit information (hereinafter referred to as CGMS information) has the following meaning:
[00] ······ Copying is permitted.
[10] ······ Copying is permitted only once (can be copied by only one generation).
[11] ······ Copying is inhibited.

When CGMS information appended to video information is [10], recording apparatuses supporting CGMS record the video information, judging that duplicate recording of the video information is permitted. However, CGMS information updated to [11] is appended to the recorded video signal. When CGMS information appended to video information to be recorded is [11], recording apparatuses supporting CGMS do not perform recording, judging that duplicate recording of the image signal is inhibited.

However, since CGMS information, in the case of digital signals, can be detected by extracting specific 2-bit information, the CGMS information is relatively easy to tamper with to persons to attempt illegal copying.

When such a tampering is performed, no conventional means are available to make a restoration of a proper condition, causing such an unfavorable result that proper copy generation limitation control is no longer available. Particularly, for an IEEE1394 interface, which serves as an interface for digital video data, there is proposed a method of protecting copyright by use of CGMS information. It is important to keep CGMS information in a proper condition at all times.

Various respective aspects and features of the invention are defined in the appended claims.

Embodiments of the present invention can keep additional information for copy generation management such as CGMS information in a correct condition at all times so that proper copy generation limitation control can always be performed.

According to the embodiments of the present invention, there is provided a method of managing copy generations by appending additional information made of electronically watermarked information and other additional information to an information signal to manage copy generations, the method comprising the step of:
updating and managing the other additional information, based on the additional information made of the electronically watermarked information.

Electronic watermark processing writes information as noise to a portion of video data or music data which is not perceptually important to human, that is, a portion which is not redundant to music and video. Since additional information made of electronically watermarked information, embedded in image data or music data by the electronic watermark processing, is embedded in the same frequency band and time zone as those of image data or music data, the additional information is difficult to delete from the image or music data and is very resistant to illegal tampering.

On the other hand, even after image data or music data has been subjected to filtering or data compression processing, additional information embedded in them can be detected from the image data or music data.

According to embodiments of the present invention, additional information for copy generation control, made of electronically watermarked information difficult to tamper as described above, is appended to an information signal such as a video signal along with other additional information such as CGMS information, and the other additional information such as CGMS information is updated based on the electronically watermarked information.

Accordingly, even if other additional information such as CGMS information was tampered, it is correctly updated so that proper copy generation management can be performed.

The invention will now be described by way of example with reference to the accompanying drawings, throughout which like parts are referred to by like references, and in which:
Fig. 1 is a block diagram showing a configuration of an embodiment of an information signal recording apparatus according to the present invention.
Fig. 2 is a diagram showing a system configuration to which an embodiment of an information signal copy generation management method according to the present invention is applied.
Fig. 3 is a block diagram showing a configuration of a set top box used in a system of Fig. 2.
Fig. 4 is a block diagram for explaining a method for superimposing electronically watermarked information used in a set top box of an embodiment of Fig. 3.
Fig. 5 is a block diagram for explaining a method for detecting electronically watermarked information used in a set top box of an embodiment of Fig. 3.
Figs. 6A to 6D are diagrams for explaining electronically watermarked information used in an embodiment of the present invention.
Fig. 7 is a block diagram of an electronically watermarked information WM updating part 208, which is part of a recording apparatus of Fig. 1.
Fig. 8 is a block diagram showing an electronically watermarked information WM decode part 207, which is part of a recording apparatus of Fig. 1.
Fig. 9 is a flowchart for explaining the operation of a recording apparatus of Fig. 1.
Fig. 10 is a block diagram of a compliant reproducing apparatus used in an embodiment of the present invention.
Fig. 11 is part of a flowchart for explaining the operation of a reproducing apparatus of Fig. 10.
Fig. 12 is part of a flowchart for explaining the operation of a reproducing apparatus of Fig. 10.
Fig. 13 is a flowchart for explaining digital output control in a reproducing apparatus of Fig. 10.

Hereinafter, with reference to the accompanying drawings, a description will be made of embodiments of a copy generation management method according to the present invention, an outputting apparatus, a recording apparatus, and a reproducing apparatus using the method.

The embodiments described below assume that an information signal is transmitted using a disk recording media, an object of copy control is video information, and the disk recording medium is a DVD (digital vide disk). As additional information for managing copy generations, CGMS information and electronically watermarked information WM are used.

With the copy control system using the electronic watermark processing, by additional information to be embedded, one of the following four states
① copy free
② copy once (can be copied by one generation)
③ no more copy
④ never copy
   is set to represent a copy generation and a copy limitation state of image data and music data on which electronically watermarked information concerned is superimposed.

"① copy free" denotes that music data and image data can be freely copied. "② copy once (can be copied by one generation)" denotes that music data and image data can be copied only once. "③ no more copy" denotes that music data and image data concerned were copied from the music data and image data of the state of "② copy once" and are inhibited to be further copied. "④ never copy" denotes that copying is wholly inhibited.

If electronically watermarked information superimposed on image data and music data denotes "copy once", recording apparatuses capable of electronic watermark processing (that is, copy limitation processing) record the image data and music data, judging that they can be copied, but electronically watermarked information updated to "no more copy" is superimposed on the recorded image data and music data. If electronically watermarked information superimposed on image data and music data to be recorded denotes "no more copy", recording apparatuses capable of electronic watermark processing are inhibited from recording the image data and music data, since the copying thereof is inhibited.

In this embodiment, the electronic watermark processing is performed in a way that spectrum-diffuses additional information for managing copy generations by using codes (hereinafter referred to as PN codes) of a PN (Pseudo random Noise) system and superimposes the spectrum-spread information on image information as electronically watermarked information WM.

As encryption processing used in recording apparatuses that perform recording on erasable recording media, predetermined scramble processing is used.

In the explanation below, an erasable DVD is termed a RAM disk and a nonerasable, read-only DVD is termed a ROM disk. Recording apparatuses and reproducing apparatuses capable of copy generation limitation processing are called compliant apparatuses, and apparatuses incapable of copy generation limitation processing are called noncompliant apparatuses. Information for managing copy generations is termed copy control information.

When a ROM disk is used and "Never Copy" is applied, an information signal recorded in the ROM disk is provided with additional information denoting the fact and is subjected to encryption of CSS (Contents Scramble System) mode. The encryption used in the ROM disk is different from that used during a writing to the RAM disks previously described.

In an example of an embodiment described below, as shown in Fig. 2, a digital broadcast transmitted over cables or radio waves is received by, e.g., a set top box (receiver) 100, the receive signal is recorded in a RAM disk 30 by a recording apparatus 200 provided separately from the receiver, and the RAM disk 30 is reproduced by a reproducing apparatus 300.

According to this embodiment, in the set top box 100, which is a form of information signal outputting apparatuses, when both CGMS information and electronically watermarked information WM are appended in a superimposed form to a received video signal, the CGMS information of output video information is updated and outputted based on the electronically watermarked information WM so that there is no discordance between the CGMS information and the electronically watermarked information. Also in the reproducing apparatus 300, CGMS information of the reproduction/output video information is updated and outputted based on the electronically watermarked information WM so that there is no discordance between the CGMS information and the electronically watermarked information.

In the recording apparatus 200 of this embodiment, when additional information made of electronically watermarked information of a video signal from the receiver denotes the state "copy once", if a receive signal from the receiver is recorded by a compliant recording apparatus, in the compliant recording apparatus, CGMS information is updated to [11], based on the electronically watermarked information WM, and the electronically watermarked information WM is updated from the state "copy once" to the state "no more copy". In other cases, updating is not performed.

In this embodiment, since spectrum spread is used for electronic watermark processing, during updating of electronically watermarked information WM, instead of deleting electronically watermarked information denoting the state "copy once", electronically watermarked information WM denoting the state "no more copy" is superimposed on electronically watermarked information WM denoting the state "copy once" by using PN codes of a different system as PN code strings used for spectrum spread.

Even after this process, spectrum-spread copy control information is superimposed on video information as a main information signal at an inconspicuous level and PN code systems are different, whereby different types of copy control information can be detected and the same effect as updating is obtained by determining copy control information closer to copy inhibition as electronically watermarked copy control information of interest. In the explanations below, a determination output indicating the result of checking electronically watermarked information WM means that, when a plurality of piece of copy control information are detected, a result determined from them is used.

In this embodiment, exchange of digital video information between the set top box 100 and the recording apparatus 200, and between the reproducing apparatus 300 and the recording apparatus 200 is performed between compliant apparatuses in MPEG compression mode through an interface of the IEEE1394 standard. To prevent illegal copying in the interface of the IEEE1394 standard, digital information to be transmitted is encrypted; it is checked whether an output destination is a compliant apparatus or recording apparatus; additional information (ordinarily, CGMS information) for managing copy generations is checked; and in accordance with the checking result, whether to send a key for solving the above encryption to the output destination is determined.

The communication control system described above is called an IEEE1394 secure bus, which provides effective prevention of copying for a digital interface of video data.

In this embodiment, electronically watermarked information WM is used as additional information for managing copy generations checked to determine whether to send a key for solving encryption to an output destination. It is to be noted that whether to send a key for solving encryption to an output destination may be determined by checking CGMS information updated based on electronically watermarked information.

Next, a description will be made of a configuration of the set top box (receiver) 100, the recording apparatus 200, and the reproducing apparatus 300 of this embodiment. In the embodiment described below, a broadcast signal is superimposed with electronically watermarked copy control information spectrum-spread by a code string PNa, which is a first PN code string, and compliant recording apparatuses update generation limitation by electronically watermarked copy control information spread by a code string PNb (different from PNa), which is a second PN code string.

In the interest of simplicity of explanation, for electronically watermarked information, "can be copied once" is described as "copy once", "further copying is inhibited" as "no more copy", and "copying absolutely inhibited" as "never copy".

### [Set top box]

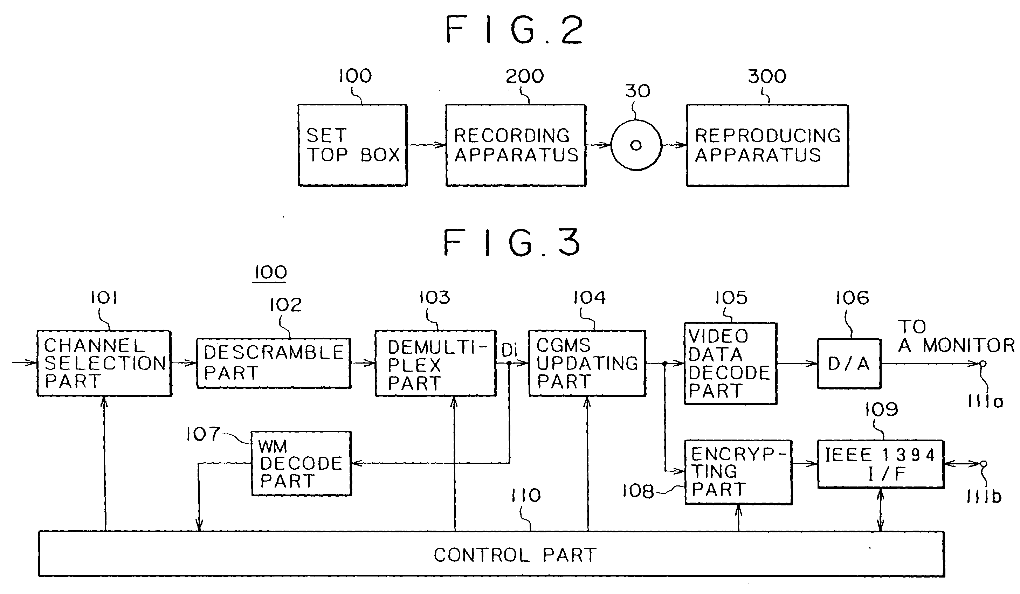

Fig. 3 is a block diagram showing a configuration of the set top box 100 used in this embodiment.

As shown in Fig. 3, a station-selection control signal in accordance with a user's channel selection operation is supplied from a control part 110 to a channel selection part 101, whereby the channel selection part 101 supplies a signal of the selected channel to a descramble part 102, where a scrambled broadcast signal is descrambled. The descrambled channel signal is supplied to a demultiplex part 103. In the demultiplex part 103, since a plurality of broadcast programs are contained in an output signal from the channel selection part 101, data of a broadcast program is extracted in accordance with the user's broadcast program selection operation from the control part 110.

Video data Di of the broadcast program from the demultiplex part 103 is MPEG-compressed. Accordingly, to supply the data Di from the demultiplex part 103 to, e.g., a display monitor, it is supplied to a video data decode part 104 via a CGMS updating part 104, where it is MPEG-decoded and decompressed. The MPEG-decoded data is converted into an analog signal by a D/A converter 105 and supplied to, e.g., a display monitor via an analog output terminal 111a.

In this embodiment, the MPEG-compressed video data Di from the demultiplex part 103 is supplied to the CGMS updating part 104 as previously described, and to an electronically watermarked information decode part (hereinafter called a WM decode part) 107. In the WM decode part 107, electronically watermarked information WM appended to the broadcast program data is extracted and copy control information is determined. The determination output is supplied to the control part 110.

The electronically watermarked information WM, in this embodiment, is superimposed on a video signal as a spectrum-spread signal. Specifically, as previously described, in this example, spectrum spread is performed in a way that generates PN codes used as spread codes at a sufficiently early cycle and multiplies them by copy control information as additional information, and thereby narrow-band, high-level copy control information is converted into a wide-band, minute-level signal which exerts no influence on a video signal. The spectrum-spread copy control information is superimposed on video data and transmitted.

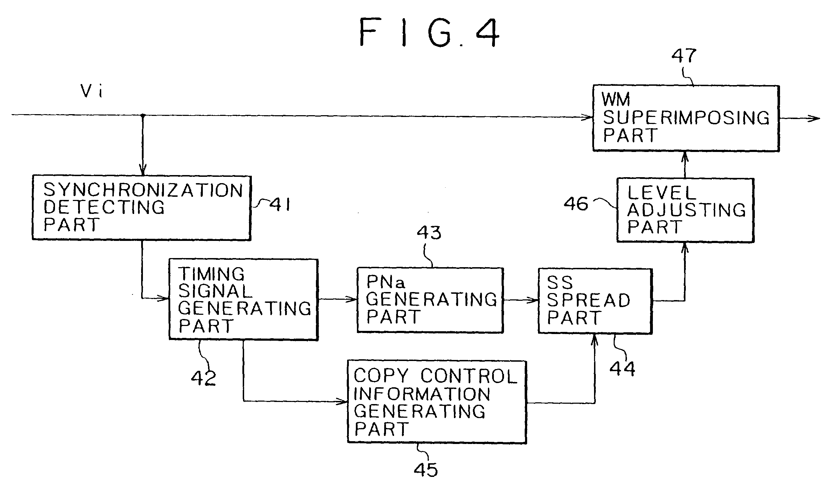

Fig. 4 is a block diagram for explaining a process of superimposing on a video signal as an information signal of electronically watermarked information WM in this case. The superimposing is performed in a broadcast side. Or the broadcast side may broadcast video signals for which the superimposing is already performed.

In Fig. 4, for example, a vertical synchronizing signal of a video signal Vi is detected in a synchronization detecting part 41 and the detected output is supplied to a timing signal generating part 42. The timing signal generating part 42 generates a timing signal synchronous with the vertical synchronizing signal.

The PNa generating part 43, in synchronization with a timing signal from the timing signal generating part 42, generates a PN code string PNa repeated in vertical synchronization in this example, and supplies the PN code string PNa to an SS spread part 44 (SS stands for spectrum spread. The same is also true for the following).

The PNa generating part 43, in synchronization with a timing signal from the timing signal generating part 42, generates copy control information to be superimposed on the video signal Vi as electronically watermarked information, and supplies it to the SS spread part 44. In this case, the copy control information to be superimposed is determined in accordance with information to be transmitted, and information denoting "copy free", "copy once", or "never copy" is generated.

The SS spread part 44 multiplies the copy control information and the PN code string PNa to generate a spectrum spread signal. The spectrum spread signal is supplied to an electronically watermarked information WM superimposing part 47 via a level adjusting part 46 and superimposed on the input video signal Vi as electronically watermarked information. The level adjusting part 46 adjusts a superimposing level so that reproduced video is not degraded as a result of the superimposing of the electronically watermarked information. In this case, the SS electronically watermarked information is superimposed at a level smaller than the dynamic range of the video signal.

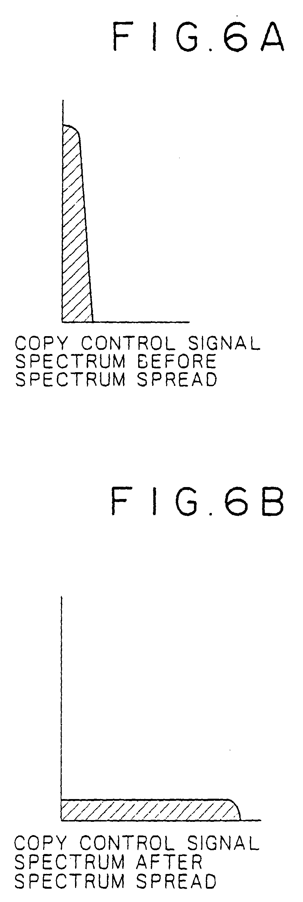

Figs. 6A to 6D show, by spectrums, a relationship between copy control information superimposed as electronically watermarked information and a video signal. The copy control information is a signal of a low bit rate that has a small amount of information and is a narrow-band signal as shown in Fig. 6A. Application of spectrum spread to the signal results in a wide-band signal as shown in Fig. 6B. At this time, a spectrum spread signal level becomes smaller in inverse proportion to an expansion ratio of a band.

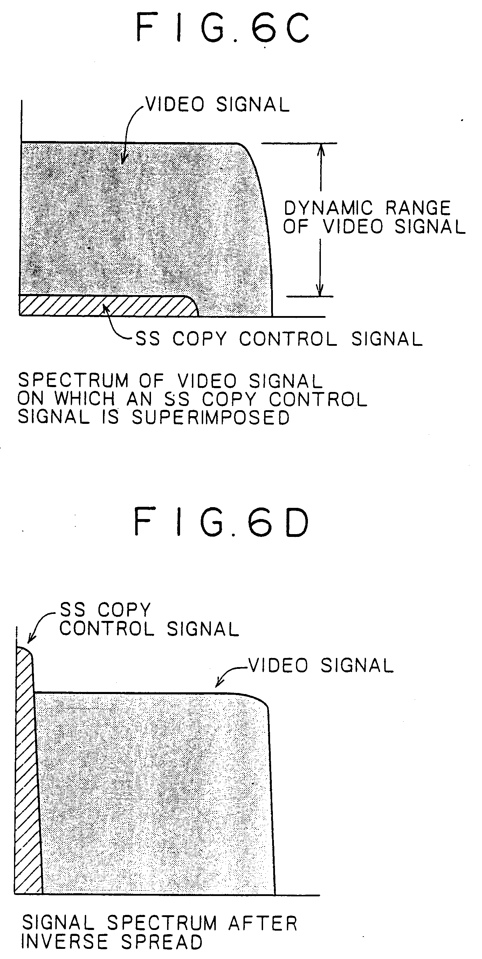

The spectrum spread signal or SS copy control information, in the WM superimposing part 47, is superimposed on the video signal Vi at a level smaller than the dynamic range of the video signal as an information signal as shown in Fig. 6C. Superimposing in this manner causes little degradation of the main information signal. Accordingly, as described above, when the video signal on which the SS copy control information is superimposed is supplied to a monitor image receiver to reproduce video, satisfactory reproduced video is obtained with little influence of the SS copy control information.

On the other hand, as described later, execution of inverse spectrum spread to detect SS copy control information causes the SS copy control information to be restored again as a narrow-band signal as shown in Fig. 6D. By affording a sufficient band spread rate, the power of the copy control information after the inverse spread exceeds an information signal, making detection possible.

In this case, since electronically watermarked information superimposed on the video signal is superimposed at the same time and within the same frequency as the video signal, the electronically watermarked information can neither be deleted nor modified by use of a frequency filter or simple replacement of information.

Hence, since the SS copy control information superimposed on the video signal will not be removed and is difficult to tamper, copy control becomes possible to ensure the prevention of illegal copying.

In the above-described configuration, with a vertical synchronizing signal as a reference signal, spectrum spread is performed using PN code strings for vertical synchronization, and thereby PN code strings for inverse spectrum spread required to detect the spectrum spread signal from the video signal can be easily generated based on a signal synchronous with a vertical synchronizing signal detected from the video signal.

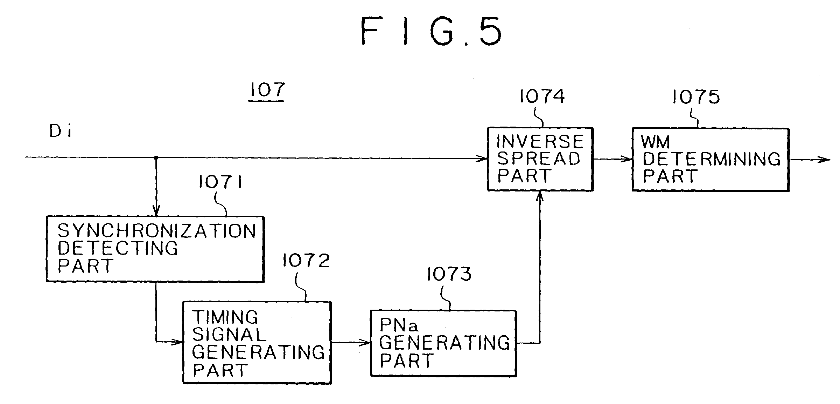

The WM decode part 107 for extracting and determining SS control information used as electronically watermarked information WM superimposed as described above can be configured as shown in Fig. 5. Specifically, as shown in Fig. 5, video data Di from the multiplex part 103 is supplied to an inverse spread part 1074 and to a synchronization detecting part 1071. The synchronization detecting part 1071 detects vertical synchronization timing and supplies the detection output to a timing signal generating part 1072.

The timing signal generating part 1072 supplies a vertical synchronization timing signal to the PNa generating part 1073. The PNa generating part 1073, which generates the same PN code system as generated in the PNa generating part 43 of the superimposing side of Fig. 4, generates a PN code string PNa at the same vertical synchronization timing as the superimposing side. The PNa code string PNa from the PNa generating part 1073 is supplied to the inverse spread part 1074, and thereby spectrum-spread copy control information is obtained. The copy control information is supplied to a WM determining part 1075, where a copy control state is determined. The determination output is supplied to the control part 110.

The control part 110, based on the determination output of the electronically watermarked information WM, in the CGMS updating part 104, updates the CGMS information so that there is no discordance between the electronically watermarked information WM and the CGMS information.

To be more specific, for example, when CGMS information of received video information is "00", which denotes "copy free", if the electronically watermarked information WM denotes "copy once", the CGMS information should be updated to "10" to denote the state "copy once".

Also, when CGMS information of received video information is "00" or "10", which denotes "copy free" and "copy once", respectively, if electronically watermarked information WM denotes "no more copy" or "never copy", the CGMS information should be updated to "11".

In this embodiment, since electronically watermarked information WM is difficult to tamper, without having to confirm the contents of CGMS information, the above-described discordance between the CGMS information and the electronically watermarked information can be prevented simply by updating the CGMS information so that there is no discordance between the CGMS information and the electronically watermarked information WM, based on the electronically watermarked information WM, so that proper copy generation management can be expected.

Compressed digital video data from the CGMS updating part 104 is digitally outputted via an IEEE1394 interface bus. In this case, copy prevention is provided by the IEEE1394 secure bus as previously described.

Specifically, the data outputted from the CGMS updating part 104 is supplied to the encryption part 108, where encryption is performed for the compressed video data, based on an encryption key different for each communication under control of the control part 110. The encryption performed in the encryption part 108 is different from the encryption performed for an information signal recorded on the RAM disk and ROM disk described previously.

The encrypted data from the encryption part 108 goes through an IEEE1394 interface 109 and is supplied to an electronic apparatus of an output destination via an output terminal 111b. The IEEE1394 interface 109 performs data conversion so as to meet an IEEE1394 interface standard concerned and outputs the converted data.

At this time, the control part 110 performs communications with the apparatus of the output destination via the IEEE1394 interface 109, determines whether the apparatus of the output destination is a compliant apparatus, and if so, determines whether it is a recording apparatus.

In this embodiment, the control part 110 determines, from the determination output of the copy control information from the WM decode part 107 and the information for determining the apparatus of the output destination via the IEEE1394 interface 109, whether to output encryption key information for solving encryption in the encryption part 108 to the output destination. In this case, as previously described, the control part 110, if a plurality of pieces of the copy control information are outputted from the WM decode part 107, uses, as the judgment output, information closer to copy inhibition.

For example, when an output destination is a non-compliant apparatus, encryption key information is not passed to the apparatus of the output destination. Even when the output destination is a compliant apparatus, if it is a recording apparatus, encryption key information is not passed to the apparatus of the output destination when electronically watermarked information WM is "no more copy" or "never copy".

As previously described, in an interface of the IEEE1394 standard, CGMS information updated in the CGMS updating part 104 may also be used as information for determining whether to send a key for solving encryption to an output destination. In this case, when an output destination is a compliant recording apparatus and the CGMS information is "11", encryption key information is not passed to the apparatus of the output destination.

Also, for the output of an analog video signal from the D/A converter 106, the analog video signal may be provided with CGMS-A information based on electronically watermarked information WM. The CGMS-A information superimposes, as copy control information, 2 bits of 20-bit additional information superimposed on a specific horizontal section within a vertical blanking period of a brightness signal of the video signal, for example, a valid video portion of the 20-th horizontal section in the case of NTSC signals.

In this way, a video signal is outputted from the set top box 100 after updating CGMS information so that there occurs no discordance, based on electronically watermarked information WM that is difficult to tamper, and thereby proper control can be performed also in an apparatus that controls copy generations, based on only CGMS information.

With a decode part provided to decode CGMS information appended to received video data, if comparison of the determination result from the WM decode part 107 and the result of determining CGMS information shows that the CGMS information is closer to copy inhibition, the CGMS information may not be updated. When there is no discordance between the CGMS information and the electronically watermarked information WM, of course, the CGMS information may not be updated.

### [Compliant recording apparatus]

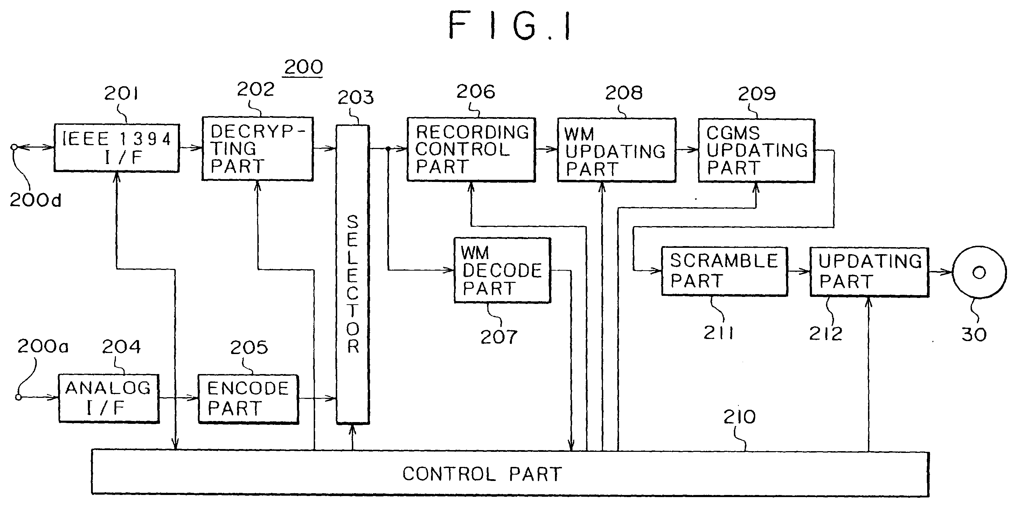

Next, a compliant recording apparatus 200 will be described. Fig. 1 is a block diagram showing a configuration of the compliant recording apparatus 200.

As shown in Fig. 1, the compliant recording apparatus 200 includes a digital input terminal 200d for an IEEE1394 interface and an analog input terminal 200a. A digital input terminal 200d is connected to an IEEE1394 interface 201. The IEEE1394 interface 201 restores data having been converted so as to meet an IEEE1394 bus interface standard concerned.

Data from the IEEE1394 interface 201 is supplied to the decrypting part 202. As previously described, for information whose information signal can be copied, judged by an apparatus connected to the digital input terminal 200d, encryption key information for solving encryption is sent from the apparatus. When the encryption key information is obtained, the decrypting part 202 can decrypt the data from the IEEE1394 interface 201 to restore compressed video data. The restored compressed video data is supplied to a selector 203.

Video information inputted via the analog input terminal 200a is supplied to a compression encode part 205 via an analog interface 204 and is MPEG-compressed, and then is supplied to the selector 203.

The selector 203 selects and outputs either of the data from the decrypting part 202 and the data from the encode part 205 by a selector control signal in accordance with a user's input selection.

The output data of the selector 203 is supplied to a recording control part 205 and a WM decode part 207. In the WM decode part 207, electronically watermarked information WM is extracted and determined, and the determination output of the electronically watermarked information WM is supplied to the control part 210.

The control part 210 determines whether the input information can be recorded (copied), based on the determination output of the electronically watermarked information WM, and if so, determines whether it is necessary to update CGMS information for copy control and electronically watermarked information.

To be more specific, the control part 210, when determining from the electronically watermarked information WM that recording is inhibited, controls the recording control part 206 and a writing part 212 so as not to perform recording.

When determining from the electronically watermarked information WM that copying is permitted (copy free), the control part 210 controls the recording control part 206 and the writing part 212 so that recording is performed. In this case, although the compressed digital video data outputted from the recording control part 206 passes through a WM updating part 208 and a CGMS updating part 209, the electronically watermarked information WM and CGMS information are not updated. The compressed digital video data from the CGMS updating part 209 is supplied to a scramble part 211.

In the scramble part 211, scramble processing different from the previously-described encryption in the CSS and IEEE1394 interface is performed. The video data subjected to the scramble processing is recorded in the RAM disk 30 by the writing part 212.

Next, When determining from the electronically watermarked information WM that copying is permitted only once (copy once), the control part 210 controls the recording control part 206 and the writing part 212 so as to perform recording, and directs the WM updating part 208 and the CGMS updating part 209 to update the electronically watermarked information WM to the state 'no more copy" and the CGMS information to "11" to inhibit recording, respectively.

The compressed digital video data in which the electronically watermarked information WM and the CGMS information are updated is subjected to the previously-described scramble processing, and then is recorded in the RAM disk 30 by the writing part 212.

Since the CGMS information is 2-bit data in a specific position in a data stream of video data, the CGMS updating part 209 may be configured so as to extract the 2-bit data and update it to the state "11".

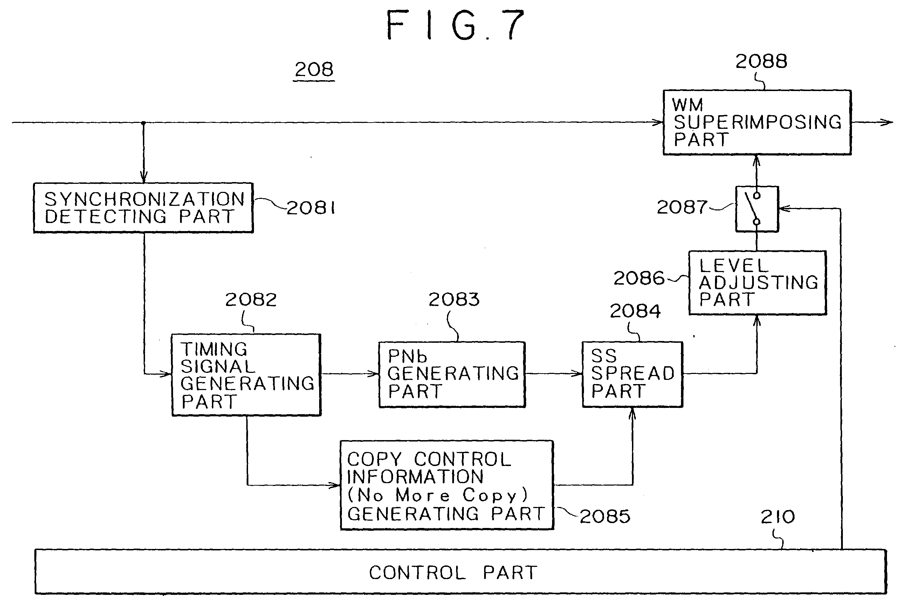

On the other hand, the electronically watermarked information WM updating part 208 is configured so as to superimpose a new spectrum spread signal because spectrum spread is used, as previously described. Fig. 7 shows a configuration of the electronically watermarked information WM updating part 208 in this case. This configuration is the same as that of the previously-described electronically watermarked information superimposing part in Fig. 4, except for some differences.

Specifically, the synchronization detecting part 2081, timing signal generating part 2082, SS spread part 2084, level adjusting part 2086, and WM superimposing part 2088 in Fig. 7 correspond to the synchronization detecting part 41, timing signal generating part 42, SS spread part 44, level adjusting part 46, and WM superimposing part 47 in Fig. 4, and has the same configuration.

One of differences with the electronically watermarked information superimposing part in Fig. 4 is that a switch circuit 2087 is provided between the level adjusting part 2086 and the WM superimposing part 2088, and is selectively controlled so as to be turned on by a switching control signal from the control part 210 only when it is judged in the control part 210 that recording is performed and updating is executed.

The second of differences with the electronically watermarked information superimposing part in Fig. 4 is that PN code strings for spectrum spread are different. That is, instead of the PNa generating part 43 in Fig. 4, in Fig. 7, a PNb generating part 2083 is provided and generates a code string PNb different from a code string PNa.

The third of differences with the electronically watermarked information superimposing part in Fig. 4 is that a copy control information generating part 2085 generates only information of "no more copy" unlike the copy control information generating part 45 in Fig. 4.

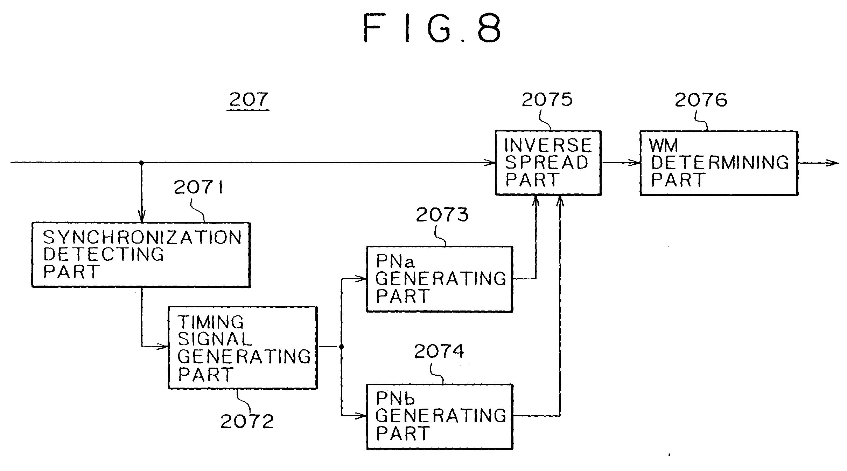

The electronically watermarked information WM decode part 207 is configured as described below. Fig. 8 is a block diagram showing a configuration of the WM decode part 207, which comprises a synchronization detecting part 2071, a timing signal generating part 2072, a PNa generating part 2073, a PNb generating part 2074, an inverse spread part 2075, and a WM determining part 2076. As apparent from comparison with the configuration of Fig. 5, the WM decode part 207 is different from that in Fig. 5 in that, in addition to the PNa generating part 2073, the PNb generating part 2074 is provided.

The WM decode part 207 provides the PNb generating part 2074, to provide for the case where the RAM disk 30 in which video data is recorded by the recording apparatus 200 is reproduced by a compliant reproducing apparatus, and it is inputted to the compliant recording apparatus 200.

The inverse spread part 2075 of the WM decode part 207 detects one or two pieces of copy control information by inverse spread by PN code strings PNa and PNb of two systems and supplies these pieces of copy control information to the WM determining part 2076. The WM determining part 2076 uses information closer to copy inhibition as determination output. The determination output is supplied to the control part 210.

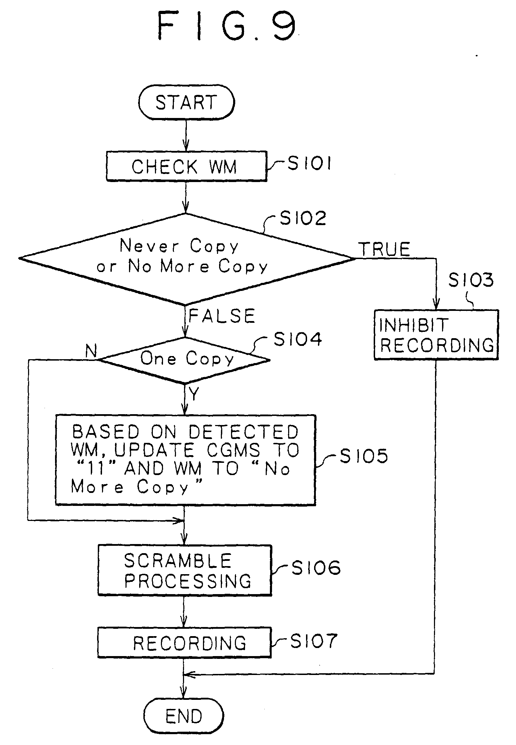

Next, the flow of processing in the recording apparatus 200 after decryption has been made will be described with reference to the flowchart of Fig. 9.

In step S101, the determination output of electronically watermarked information WM from the WM decode part 207 is checked. In the next step S102, it is checked whether the electronically watermarked information WM is "never copy" or "no more copy". If so, control proceeds to step S103, where recording is inhibited and recording processing is discontinued. If not so, control proceeds to step S104. The state "never copy" is not detected in video information from a digital input terminal, but it may be detected in video information from an analog input terminal.

In step S104, it is determined whether the electronically watermarked information WM is "copy once". If not so, since the electronically watermarked information is "copy free", control jumps to step S106 to perform scramble processing, and in step S107, recording to the RAM disk 30 is performed.

When the electronically watermarked information WM is "copy once", control proceeds to step S105, where the CGMS information is updated to "11" in the CGMS updating part 209, based on the detected electronically watermarked information WM, and the electronically watermarked information WM is updated to "no more copy" in the WM updating part 208. In this embodiment, as previously described, the electronically watermarked information is updated by further superimposing the electronically watermarked information WM denoting "no more copy".

After step S105, control proceeds to step S106, where scramble processing is performed for the video data, and in step S107, recording to the RAM disk 30 is performed. In the RAM disk 30, information (hereinafter referred to as a scramble flag) indicating that the information to be recorded is scrambled is recorded as additional information.

When the electronically watermarked information WM denotes the state "copy free", it is to be noted that, after step S104, without performing scramble processing, control may jump to step S107 to perform recording to the RAM disk 30. However, in the case of the above-described example, a recording information signal is always scrambled (encrypted) during recording to the RAM disk 30 so that illegal copying is easily detected in a reproducing apparatus described later.

In the way described above, in a recording apparatus of this embodiment, CGMS information is updated based on electronically watermarked information WM before recording is performed. As previously described, since electronically watermarked information WM is superimposed in the same frequency band and time zone as those of video information, illegal tampering by a person to attempt illegal copying is very difficult. Accordingly, it can be expected that the CGMS information is always correctly updated and recorded on the RAM disk 30.

Therefore, also in an apparatus which performs recording control such as copy generation limitation processing by only CGMS information, effects as initially expected can be obtained with respect to copy control. Also, in the case where information recorded on the RAM disk 30 is reproduced and the reproduced digital information is subjected to transmission control by the IEEE1394 interface, even when transmission of video data and exchange of encryption keys are controlled using only CGMS information as verification information, effects as initially expected can be obtained.

### [Compliant reproducing apparatuses]

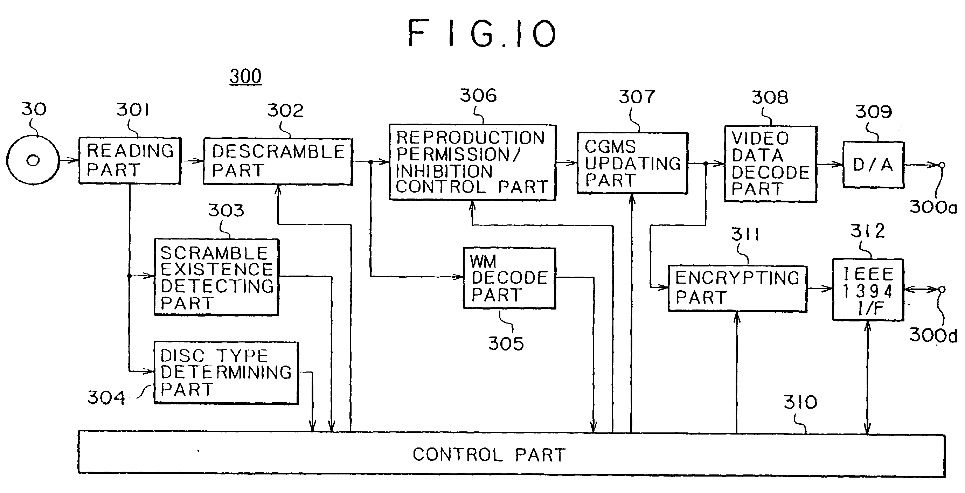

Next, a configuration of a compliant reproducing apparatus 300 will be described with reference to Figs. 10 to 13.

Fig. 10 is a block diagram showing the overall configuration of the compliant reproducing apparatus 300. As shown in Fig. 10, information recorded on a disk 30 mounted in the reproducing apparatus 300 is read in a reading part 301 and is supplied to a descramble part 302, a scramble existence detecting part 203, and a disk type determining part 304.

The scramble existence detecting part 303 extracts a scramble flag recorded in the disk 30 as additional information, detects whether recorded information is scrambled, and outputs the detection result to the control part 310. A ROM disk in which information with CGMS information of "11" or electronically watermarked information of the state "never copy" is recorded, that is, a ROM disk that must not be copied is scrambled in CSS (Contents Scramble System) mode.

The disk type determining part determines, from, e.g., TOC (Table Of Contents) or directory information, whether a mounted disk is a RAM disk or ROM disk, and supplies the determination output to the control part 310.

The descramble part 302 eliminates a scramble applied in the scramble part 211 of the recording apparatus 200. The descramble part 302 performs descrambling also for a RAM disk, recorded by a non-compliant recording apparatus, which may not have been scrambled. Consequently, a not-scrambled RAM disk recorded by a non-compliant recording apparatus is rather scrambled by the descramble processing, so that reproducing signals incapable of normal reproduction are generated.

The descramble part 302 also descrambles a ROM disk scrambled in CSS mode. What type of descramble processing is performed in the descramble part 302 is determined by the control part 310 from the determination output of the disk type determining part 304 indicating a RAM or ROM disk.

The data outputted from the descramble part 302 is supplied to the WM decode part 305 and the reproduction permission/inhibition control part 306. In the WM decode part 305, electronically watermarked information WM is extracted and determined, and the determination output of the electronically watermarked information WM is supplied to the control part 310.

The control part 310 determines whether to permit or inhibit reproduction, from the detection output of the scramble existence detecting part 303 previously described, the determination output of the disk type determining part 304, and the determination output of electronically watermarked information WM. The control information is supplied to the reproduction permission/inhibition control part 306, and for reproduction inhibition, processing in and after the reproduction permission/inhibition control part 306 is inhibited. Accordingly, for reproduction inhibition, an analog reproduction output signal is not outputted, nor is transmitted a digital output via the IEEE1394 interface.

For reproduction permission, processing in and after the reproduction permission/inhibition control part 306 becomes effective, and video data from the reproduction permission/inhibition control part 306 is supplied to the CGMS updating part 307. In the CGMS updating part 307, as in the above-described set top box 100, CGMS information is updated so that there is no discordance with the electronically watermarked information WM extracted and determined in the WM decode part 305.

Compressed digital video data from the CGMS updating part 307 is supplied to a video data decode part 308 and the MPEG-compressed data is decompressed and decoded. The decompressed and decoded data is supplied to the D/A converter 309 and converted into an analog signal, and then supplied to an external electronic apparatus via an analog output terminal 300a.

The WM decode part 305 has exactly the same configuration as the WM decode part 207 shown in Fig. 8.

The compressed digital video data from the CGMS updating part 307 is digitally outputted via the IEEE1394 interface bus. In this case, as previously described, protection is provided against illegal copying of the digital output by the IEEE1394 secure bus.

Specifically, the output data of the CGMS updating part 307 is supplied to the encryption part 311 and the compressed video data is encrypted based on an encryption key different for each communication under control of the control part 310. The encryption processing in the encryption part 311 is the same as the encryption processing in the encryption part 108 of the set top box 100 previously described.

The encrypted data from the encryption part 311 goes through the IEEE1394 interface 312 and is supplied to an electronic apparatus of an output destination via an output terminal 300b. The IEEE1394 interface 312 performs data conversion so as to meet the IEEE1394 interface standard and outputs the converted data.

At this time, the control part 310 performs communications with the apparatus of the output destination via the IEEE1394 interface 312, determines whether the apparatus of the output destination is a compliant apparatus, and if so, determines whether it is a recording apparatus.

In this embodiment, the control part 310 determines, from the determination output of the copy control information from the WM decode part 305 and the determination information for the apparatus of the output destination via the IEEE1394 interface 109, whether to output encryption key information for solving encryption in the encryption part 108 to the output destination. In this case, as previously described, the control part 310, if a plurality of pieces of the copy control information are outputted from the WM decode part 305, uses, as the judgment output, information closer to copy inhibition.

For example, when an output destination is a non-compliant apparatus, encryption key information is not passed to the apparatus. Even when the output destination is a compliant apparatus, if it is a recording apparatus, encryption key information is not passed to the apparatus of the output destination when electronically watermarked information WM is "no more copy" or "never copy".

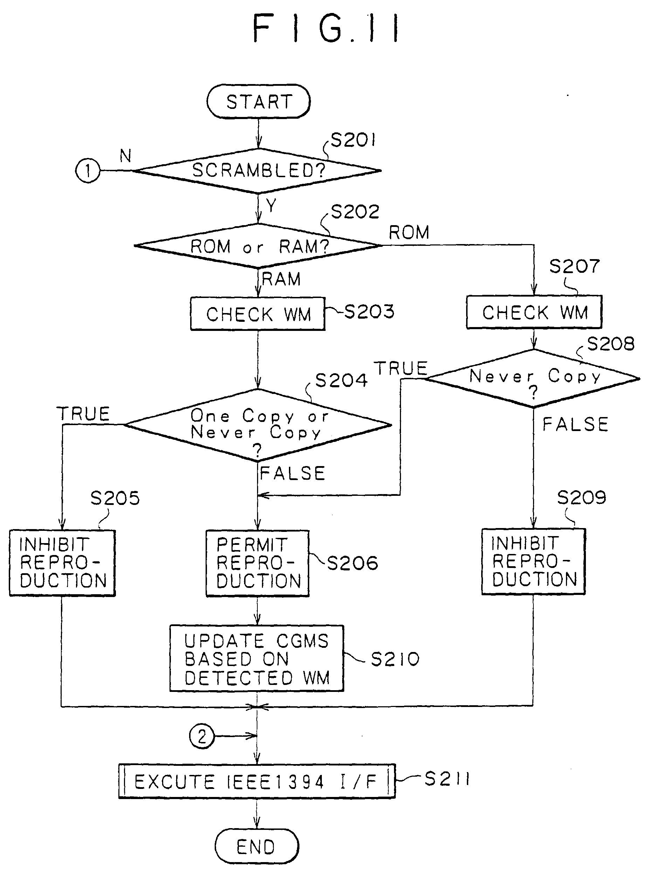

Next, referring to Figs. 11 to 13, the operation of the compliant reproducing apparatus of this embodiment will be described.

To be more specific, in the reproducing apparatus 300, in step S201, it is determined whether a mounted disk is scrambled. Scrambles checked here include a scramble applied in the scramble part 211 of the recording apparatus 200 and a scramble of the CSS mode of a ROM disk. If the disk is scrambled, control proceeds to step S202, where it is determined whether the disk type is ROM or RAM.

If the mounted disk is a RAM disk, control proceeds to step S203, where electronically watermarked information WM is checked. In the next step S204, it is determined whether the electronically watermarked information WM denotes the state "copy once" or "never copy", and if so, control proceeds to step S205, where reproduction is inhibited.

Specifically, the following describes the reason that reproduction is inhibited when it is determined that electronically watermarked information WM is determined as "copy once" in step S204. As previously described, having been scrambled means that the disk 30 to be reproduced is a RAM disk recorded by the compliant recording apparatus 200, and nevertheless the electronically watermarked information WM being in the state "copy once" means that illegal copying was performed.

This is because, for a RAM disk recorded by the compliant recording apparatus 200, the electronically watermarked information WM must have been updated to "no more copy" from "copy once".

Reproduction inhibition for a RAM disk when the electronically watermarked information WM is determined to be in the state "never copy" is because it means that the RAM disk is a product of illegal copying of information from, e.g., a ROM with electronically watermarked information of "never copy".

When it is determined in step S204 that the electronically watermarked information WM is not in the state "copy once" or "never copy", control proceeds to step S206, where reproduction is permitted. Then, control proceeds to step S210, where, based on the electronically watermarked information WM determined in the WM decode part 305, the CGMS information (CGMS-D) of the digital video data is updated so that there is no discordance with the electronically watermarked information WM. Control proceeds to step S211, where IEEE1394I/F output control, which is digital output control, is performed.

When it is determined in step S202 that a mounted disk is a ROM disk, control proceeds to step S207, where electronically watermarked information WM is checked. In the next step S208, it is determined whether the electronically watermarked information WM is "never copy". Specifically, this determination is a process of seeing if the electronically watermarked information of a copying-inhibited ROM disk scrambled in the CSS mode is correctly in the state "never copy".

When it is determined in step S208 that the electronically watermarked information is not in the state "never copy", judging that tampering was performed, control proceeds to step S209, where reproduction is inhibited. If the electronically watermarked information is correctly in the state "never copy", control proceeds to step S206, where reproduction is permitted. Control proceeds to step S210 to update the CGMS information (updated to "11"), and further proceeds to step S211 to execute digital output control.

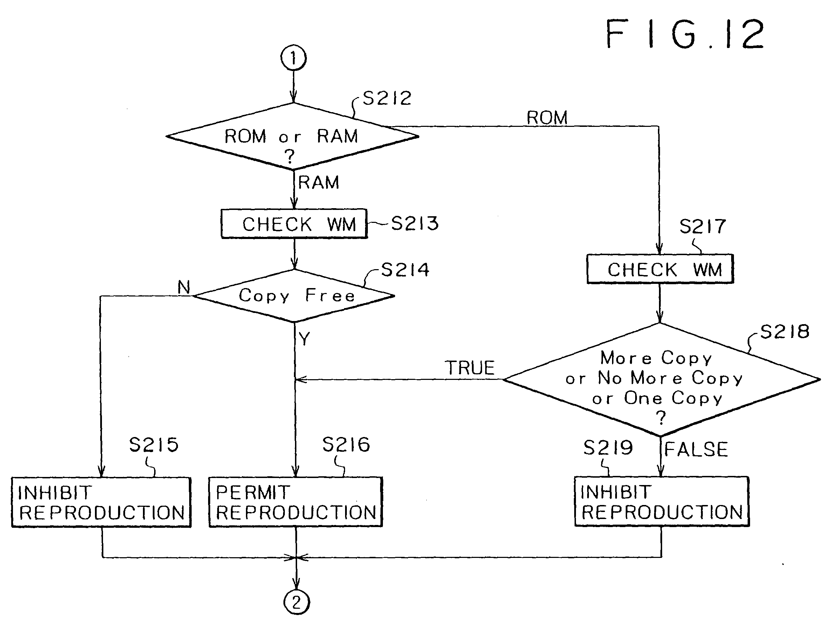

When it is determined in step S201 that information recorded in the disk is not scrambled, control proceeds to step S212 of Fig. 12, where it is determined whether the disk is a ROM or RAM disk. When it is determined that the disk is a RAM disk, control proceeds to step S213 to check the electronically watermarked information WM.

It is determined in the next step S214 whether the electronically watermarked information WM is "copy free", and if not so, control proceeds to step S215, where reproduction is inhibited, considering that illegal tampering was performed. When it is determined in step S214 that the electronically watermarked information WM is "copy free", control proceeds to step S216 to permit reproduction.

When it is determined in step S212 that the disk is a ROM disk, control proceeds to step S217 to check the electronically watermarked information WM. It is determined whether the electronically watermarked information WM is "copy free", "no more copy", or "one copy", and if so, control proceeds to step S216 to permit reproduction; otherwise, control proceeds to step S219 to inhibit reproduction.

Specifically, since a ROM disk with the electronically watermarked information of "never copy" must have been scrambled in the CSS mode in this embodiment, if the ROM disk is not scrambled and the electronically watermarked information WM is "never copy", reproduction is inhibited, judging that illegal tampering was performed.

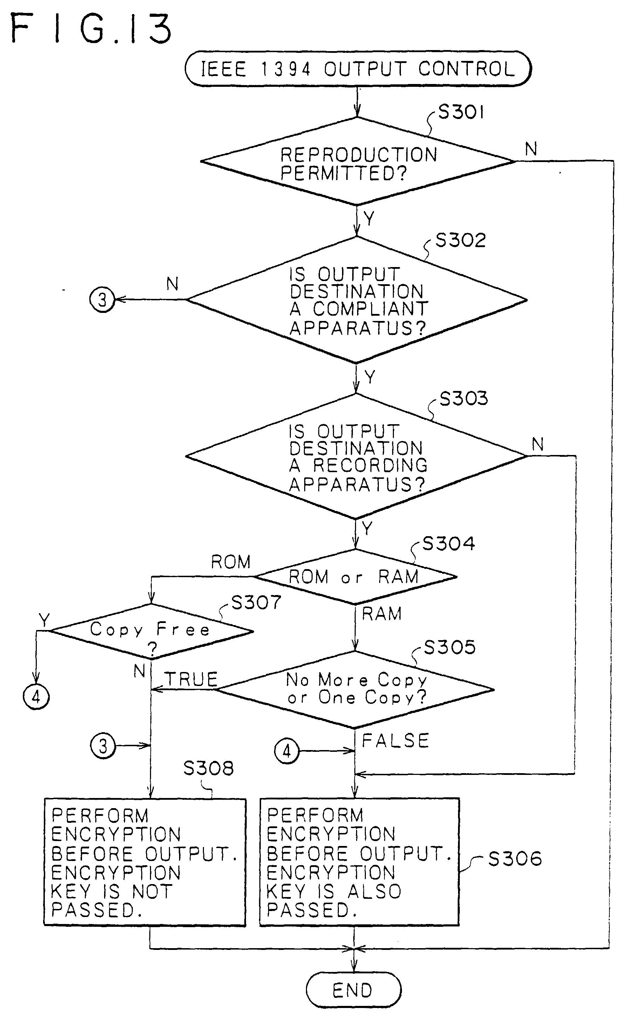

Next, output control in step S211 will be described. Fig. 13 is a flowchart for explaining IEEE1394 I/F output control of digital output control. This is the IEEE1394 secure bus control previously described.

It is determined in step S301 whether reproduction is permitted, and if reproduction is inhibited, the output control routine terminates. If reproduction is permitted, control proceeds to step S302 to determine whether communications with an output destination are performed through the IEEE1394 bus and the output destination is a compliant apparatus. If is determined from the determination result that the output destination is not a compliant apparatus, control proceeds to step S308, where the digital information (MPEG- compressed data) is encrypted and outputted, but an encryption key for solving the encryption is not sent to the output destination. This disables decryption in non-compliant apparatuses.

If is determined from the determination result in step S302 that the output destination is a compliant apparatus, control proceeds to step S303, where it is determined whether the compliant apparatus of the output destination is a recording apparatus. When it is determined that the output destination is not a recording apparatus, control jumps to step S306, where the digital information (MPEG-compressed data) is encrypted and outputted, and an encryption key for solving the encryption is also sent to the output destination.

When it is determined in step S303 that the output destination is a compliant recording apparatus, control proceeds to step S304, where it is determined whether the disk is a ROM or RAM disk. When it is determined that the disk is a RAM disk, control proceeds to step S305, where, in this embodiment, it is determined whether the electronically watermarked information WM is "no more copy" or "one copy".

If the electronically watermarked information is not "no more copy" or "one copy", control proceeds to step S306, where the digital information (MPEG-compressed data) is encrypted and outputted, and an encryption key for solving the encryption is also sent to the output destination. When the electronically watermarked information is "no more copy" or "one copy", control proceeds to step S308, where the digital information (MPEG-compressed data) is encrypted and outputted, but an encryption key for solving the encryption is not sent to the output destination.

When it is determined in step S304 that the disk is a ROM disk, control proceeds to step S307, where it is determined whether the electronically watermarked information WM is "copy free", and if so, control proceeds to step S306, where the digital information (MPEG-compressed data) is encrypted and outputted, and an encryption key for solving the encryption is also sent to the output destination. If the electronically watermarked information WM is not "copy free", control proceeds to step S308, where the digital information (MPEG-compressed data) is encrypted and outputted, but an encryption key for solving the encryption is not sent to the output destination.

As has been described above, according to a reproducing apparatus of this embodiment, copyright protection is provided for digital video data output by an IEEE1394 interface secure bus, and CGMS information contained in the output digital video data is updated based on electronically watermarked information WM very resistant to illegal tampering so that there is no discordance between both additional information.

Hence, in a recording apparatus to which digital video data is supplied from the reproducing apparatus, duplicate recording control can be correctly performed based on the CGMS information.

According to the reproducing apparatus 300, in the interface of the IEEE1394 standard, CGMS information updated in the CGMS updating part 307 may also be used as information for determining whether to send a key for solving encryption to an output destination. In this case, when an output destination is a compliant recording apparatus and the CGMS information is "11", encryption key information is not passed to the apparatus of the output destination.

Also in the reproducing apparatus 300, as with the set top box 100 previously described, for the output of an analog video signal from the D/A converter 309, the analog video signal may be provided with CGMS-A information based on electronically watermarked information WM.

Furthermore, with a decode part provided to decode CGMS information appended to reproduced video data, if comparison of the determination result from the WM decode part 305 and the result of determining CGMS information shows that the CGMS information is closer to copy inhibition, the CGMS information may not be updated. When there is no discordance between the CGMS information and the electronically watermarked information WM, of course, the CGMS information may not be updated.

### [Variation]

Although, in the embodiment of the above-described reproducing apparatus, reproduction inhibition is applied as a method for copy limitation, any method for copy limitation may be used so long as the reproduction of normal information signals can be substantially inhibited. For example, in the case where an information signal is a video signal or audio signal, it is a good idea to make video inadequate for viewing as normal images or produce noise. When reproduction is inhibited, it is also a good idea to display on a screen a message "This disk cannot be reproduced because it was illegally copied" or produce a vocal equivalent thereof.

Although, in the above-described embodiment, additional information appended along with electronically watermarked information is CGMS information, it goes without saying that the present invention is not limited to the CGMS information.

For electronically watermarked information, without being limited to the spectrum spread method in the above-described embodiment, various electronic watermark methods can be used. For example, additional information may be superimposed in a digital signal at a minute level, or when compression using orthogonal transformation such as MPEG compression is performed for data, additional information of a minute level may be superimposed in components transformed into the frequency axis so that it is inconspicuous as noise. Alternatively, electronic watermark processing may be used which splits one screen into small areas of predetermined size and superimposes unit electronic watermark patterns in video information in such a way that they are set in the small area units.

Erasable recording media, without being limited to disk recording media, may be, e.g., semiconductor storage apparatuses or magnetic tape. It goes without saying that an information signal may be, e.g., a sound signal without being limited to a video signal.

It goes without saying that the present invention is applicable to a recording/reproducing apparatus which has both the portion of a recording apparatus and the portion of a reproducing apparatus in the above-described embodiment. An information signal outputting apparatus according to the present invention, regardless of an embodiment of the previously-described set top box, is applicable to reoutput digital video data obtained from other computers or servers by an apparatus for broadcasting stations or a computer connected to a network to the network.

Although the above-described recording apparatus is constructed to update electronically watermarked information as well, only CGMS information needs to be updated, but electronically watermarked information may not.

As has been described above, according to the present invention, electronically watermarked information and other additional information are appended in a superimposed form to an information signal, for the purpose of management of copy generations thereof, in a manner that updates the additional information, based on the electronically watermarked information difficult to tamper. Therefore, even if the other additional information was tampered, the contents of other additional information concerned can be kept correct.

According to an information signal outputting apparatus of an embodiment of the present invention, based on electronically watermarked information WM difficult to tamper, other additional information, e.g., CGMS information, is updated so as not to cause discordance before outputting a video signal. Therefore, in a system performing copy generation control based on, e.g., only CGMS information, proper copy generation management can be expected.

According to an information signal recording apparatus of an embodiment of the present invention, based on electronically watermarked information difficult to tamper, a copy generation indicated by other additional information is correctly updated. Therefore, the other additional information, which is always correct, is also recorded on a recording medium.

Accordingly, in the case where the other additional information is CGMS information, the CGMS information is kept correct, for example, in the case where the recording medium is reproduced by a reproducing apparatus so that an information signal is supplied to a recording apparatus through an IEEE1394 interface secure bus. Therefore, proper interface output control can be expected and copy generation management can be effectively performed.

According to an information signal reproducing apparatus of an embodiment of the present invention, based on electronically watermarked information WM very resistant to illegal tampering, other additional information is updated so that there is no discordance between both additional information. Hence, upon receipt of digital video data from the reproducing apparatus, a recording apparatus can perform proper copy recording control based on the other additional information. Accordingly, in a recording apparatus that does not support copy limitation processing by electronically watermarked information but supports copy limitation processing by the other additional information, proper copy recording control can be performed without fail.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A copy generation management method of managing copy generations by appending additional information made of electronically watermarked information and other additional information to an information signal to manage copy generations, said method comprising the step of:
updating and managing said other additional information, based on the additional information made of said electronically watermarked information.

2. The copy generation management method according to claim 1, wherein said information signal is video information and said other additional information is CGMS (copy generation management system) information.

3. An information signal recording apparatus for recording an information signal to which additional information made of electronically watermarked information and other additional information are appended to manage copy generations, said apparatus comprising:
detection means for detecting said electronically watermarked information from said information signal;
recording control means for controlling whether to permit recording in accordance with said detected electronically watermarked information; and
updating means, when recording is permitted by said recording control means, for updating said other additional information appended to an information signal to be recorded, as required, based on said electronically watermarked information detected by said detection means.

4. The information signal recording apparatus according to claim 3, further comprising:
electronically watermarked information updating means, when recording is permitted by said recording control means, for substantially updating electronically watermarked information appended to an information signal to be recorded, as required, based on said electronically watermarked information detected by said detection means.

5. The information signal recording apparatus according to claim 3, wherein said information signal is video information and the other additional information is CGMS (copy generation management system) information.

6. An information signal outputting apparatus for receiving an information signal to which additional information made of electronically watermarked information and other additional information are appended to manage copy generations, and outputting the information signal, said apparatus comprising:
detection means for detecting said electronically watermarked information from said inputted information signal; and
updating means for updating, based on said electronically watermarked information detected by said detection means, said other additional information appended to said information signal to be outputted so that there is no discordance with said electronically watermarked information.

7. The information signal outputting apparatus according to claim 6, wherein said information signal is video information and said other additional information is CGMS (copy generation management system) information.

8. An information signal reproducing apparatus for reproducing an information signal from a recording medium in which the information signal is recorded, wherein the information signal is provided with additional information made of electronically watermarked information and other additional information to manage copy generations, said apparatus comprising:
detection means for detecting said electronically watermarked information from the information signal reproduced from said recording medium; and
updating means for updating, based on said electronically watermarked information detected by said detection means, said other additional information appended to said reproduced information signal so that there is no discordance with said electronically watermarked information.

9. The information signal reproducing apparatus according to claim 8, wherein said information signal is video information and said other additional information is CGMS (copy generation management system) information.

10. An information signal outputting apparatus which encrypts an information signal to which CGMS (copy generation management system) information and additional information made of electronically watermarked information are appended to manage copy generations, and outputs the encrypted information signal to other apparatus through an IEEE1394 interface, for deciding whether to pass said encrypted key information to said other apparatus in accordance with said CGMS information, said apparatus comprising:
means for extracting additional information made of said electronically watermarked information from said information signal and determining said additional information;
updating means for updating, based on said determined electronically watermarked information, said CGMS information so that there is no discordance with said electronically watermarked information; and
control part for deciding, based on said CGMS information updated by said updating means, whether to pass said encrypted key information to said other apparatus.
